# EUROPEAN PATENT APPLICATION

(11) **EP 2 144 142 A2**
(43) Date of publication of application: **13.01.2010**
(21) Application number: 09156677.8
(22) Date of filing: 30.03.2009
(51) Int. Cl.: G06F 3/038

(54) **Input apparatus using motions and user manipulations and input method applied to such input apparatus**

(30) Priority: 10.07.2008 KR 20080066996
(71) Applicant: Samsung Electronics Co., Ltd., Suwon-si, Gyeonggi-do (KR)
(72) Inventor: Kang, Yong-jin, Gyeonggi-do (KR); Lee, Sung-han, Gyeonggi-do (KR); Shin, Hyun-coog, Gyeonggi-do (KR); Kim, Dae-hyun, Gyeonggi-do (KR); Yoon, Eung-sik, Gyeonggi-do (KR)
(74) Representative: Land, Addick Adrianus Gosling

(57) **Abstract**

An input apparatus and a command inputting method are described. The input apparatus generates a predetermined command using a motion detected by a motion detector and a user manipulation input to an input unit. Accordingly, a user can use the input device capable of motion detection in various manners to control a number of to-be-controlled devices.

## Description

This application claims priority under 35 U.S.C. § 119 (a) from Korean Patent Application No. 10-2008-66996, filed on July 10, 2008, in the Korean Intellectual Property Office, the disclosure of which is incorporated herein by reference in its entirety.

The present general inventive concept relates to an input apparatus and an input method applied to such an input apparatus, and more particularly, to an input apparatus which detects various motions and may be input with user manipulations and an input method applied to such an input apparatus.

A conventional remote controller or mouse is an input apparatus that receives user commands using a button, a wheel, a jog switch, or a touch pad. However, in recent years, a remote controller or mouse apparatus has been developed to provide a function of detecting motions and also providing a pointer function.

A remote controller capable of detecting various motions enables a user to use the remote controller more intuitively. However, since sensitivity for motion detection is low, it is difficult to minutely control a pointer simply by moving a remote controller. Also, user commands that can be input using the movement are limited.

Also, users need more intuitive interfaces. Therefore, there has been a demand for a method of allowing a user to use an input apparatus capable of motion detection in various manners.

The present general inventive concept provides a method of allowing a user to use an input apparatus capable of motion detection in various manners. More specifically, the present general inventive concept provides an input apparatus which generates a predetermined command using a motion detected by a motion detector and a user manipulation input to an input unit, and an input method applied to such an input apparatus.

Additional aspects and utilities of the present general inventive concept will be set forth in part in the description which follows and, in part, will be obvious from the description, or may be learned by practice of the general inventive concept.

An embodiment of the general inventive concept may be achieved by providing an input apparatus, including a motion detector which detects a motion of the input apparatus, an input unit which is input with a user manipulation, and a controller which generates a predetermined command using a motion detected by the motion detector and a user manipulation input to the input unit.

The controller may generate a move command to move a pointer displayed on a screen using a motion detected by the motion detector and a user manipulation input to the input unit.

The input unit may include a touch input unit which is input with a user touch, and, if a motion is detected by the motion detector, the controller may generate a move command to move the pointer in the same direction as that of the detected motion, and if a touch is input to the touch input unit, the controller may generate a move command to move the pointer in the same direction as that of the input touch.

The input unit may include a direction input unit which is input with a manipulation of a direction, and, if a motion is detected by the motion detector, the controller may generate a move command to move the pointer in the same direction as the detected motion, and if a manipulation of a direction is input to the direction input unit, the controller may generate a move command to move the pointer in the same direction as the input direction.

The direction input unit may be at least one of a jog switch, a joystick and a direction button.

The controller may generate a predetermined command by combining a motion detected by the motion detector and a user manipulation input to the input unit.

If a user manipulation is input to the input unit and if a motion is detected by the motion detector simultaneously or within a predetermined time after the user manipulation is input, the controller may generate a single command by combining an input manipulation signal and a detected motion signal.

The input unit may include a touch input unit which is input with a user touch, and, if a user touch is input to the touch input unit and if a motion is detected by the motion detector simultaneously or within a predetermined time after the touch is input, the controller may generate a single command by combining an input touch signal and a detected motion signal.

The input unit may include a button unit having a plurality of buttons, and, if a button manipulation is input to the button unit and if a motion is detected by the motion detector simultaneously or within a predetermined time after the button manipulation is input, the controller may generate a command by combining a button manipulation signal and a detected motion signal.

If a motion is detected by the motion detector and if a user manipulation is input to the input unit simultaneously or within a predetermined time after the motion is detected, the controller may generate a single command by combining a detected motion signal and an input manipulation signal.

The input unit may include a touch input unit which is input with a user touch, and, if a motion is detected by the motion detector and if a user touch is input to the touch input unit simultaneously or within a predetermined time after the motion is detected, the controller may generate a single command by combining a detected motion signal and an input touch signal.

The input unit may include a button unit having a plurality of buttons, and, if a motion is detected by the motion detector and if a button manipulation is input to the button unit simultaneously or within a predetermined time after the motion is detected, the controller may generate a single command by combining a detected motion signal and a button manipulation signal.

The motion detector may include an acceleration sensor and an angular velocity sensor.

An embodiment of the general inventive concept may also be also achieved by providing a method of inputting a command using an input apparatus, the method including detecting a motion of the input apparatus, receiving a user manipulation, and generating a predetermined command using the detected motion and the input user manipulation.

The command generating operation may generate a move command to move a pointer displayed on a screen using both of the detected motion and the input user manipulation.

The receiving operation may receive a user touch, and, if a motion is detected, the command generating operation generates a move command to move the pointer in the same direction as that of the detected motion, and if a touch is input, the command generating operation may generate a move command to move the pointer in the same direction as that of the input touch.

The receiving operation may receive a manipulation of a direction, and, if a motion is detected, the command generating operation generates a move command to move the pointer in the same direction as that of the detected motion, and if the manipulation of the direction is input, the command generating operation may generate a move command to move the pointer in the same direction as the input direction.

The manipulation of the direction may be input by at least one of a jog switch, a joystick and a direction button.

The command generating operation may generate a predetermined command by combining the detected motion and the input user manipulation.

If the user manipulation is input and if the motion is detected simultaneously or within a predetermined time after the user manipulation is input, the command generating operation may generate a single command by combining an input manipulation signal and a detected motion signal.

The receiving operation may receive a user touch, and, if the user touch is input and if the motion is detected simultaneously or within a predetermined time after the user touch is input, the command generating operation may generate a single command by combining an input touch signal and a detected motion signal.

The receiving operation may receive a user button manipulation, and, if the button manipulation is input and if the motion is detected by the motion detector simultaneously or within a predetermined time after the button manipulation is input, the command generating operation may generate a single command by combining a button manipulation signal and a detected motion signal.

If the motion is detected and if the user manipulation is input simultaneously or within a predetermined time after the motion is detected, the command generating operation may generate a single command by combining a detected motion signal and an input manipulation signal.

The receiving operation may receive a user touch, and, if the motion is detected and if the user touch is input simultaneously or within a predetermined time after the motion is detected, the command generating operation may generate a single command by combining a detected motion signal and a input touch signal.

The receiving operation may receive a user button manipulation, and, if the motion is detected and if the button manipulation is input simultaneously or within a predetermined time after the motion is detected, the command generating operation may generate a single command by combining a detected motion signal and a button manipulation signal.

The motion detecting operation may detect a motion of the input apparatus using an acceleration sensor and an angular velocity sensor

A further embodiment of the general inventive concept may also be also achieved by providing an input apparatus including a motion detector that may detect motions of low sensitivities, and a touch input unit that may detect manipulations of high sensitivities.

A further embodiment of the general inventive concept may also be also achieved by providing an input apparatus including a motion detector that may generate first signals to correspond to detected motions of the input apparatus, an input unit that may generate second signals to correspond to detected user manipulations of the input apparatus, and a controller to combine the first and second signals into a single command to be transmitted to a transmitter.

A further embodiment of the general inventive concept may also be also achieved by providing an input apparatus including a motion sensor that may detect a translation using an acceleration sensor and detect a rotation using an angular velocity sensor and transmit information regarding the translation and the rotation to a controller. The converter may receive a translation data signal and a rotation data signal.

A further embodiment of the general inventive concept may also be also achieved by providing an input apparatus including an input apparatus to generate a pointer move command based on a motion of the input apparatus and touch manipulation.

A further embodiment of the general inventive concept may also be also achieved by providing an input apparatus including a controller that may generate a command to raise or lower a volume of a to-be-controlled device when the input apparatus is moved up or down.

A further embodiment of the general inventive concept may also be also achieved by providing a method of inputting a command using an input apparatus, the method including detecting motions of low sensitivities, and detecting manipulations of high sensitivities.

A further embodiment of the general inventive concept may also be also achieved by providing a method of inputting a command using an input apparatus, the method including generating first signals to correspond to detected motions of the input apparatus, generating second signals to correspond to detected user manipulations of the input apparatus, and combining the first and second signals into a single command to be transmitted to a transmitter.

A further embodiment of the general inventive concept may also be also achieved by providing a method of inputting a command using an input apparatus, the method including detecting a translation using an acceleration sensor and detect a rotation using an angular velocity sensor and transmit information regarding the translation and the rotation to a controller. A translation data signal and a rotation data signal may be received into a converter.

A further embodiment of the general inventive concept may also be also achieved by providing a method of inputting a command using an input apparatus, the method including generating a pointer move command based on a motion of the input apparatus and touch manipulation.

A further embodiment of the general inventive concept may also be also achieved by providing a method of inputting a command using an input apparatus, the method including generating a command to raise or lower a volume of a to-be-controlled device when the input apparatus is moved up or down.

A further embodiment of the general inventive concept may also be also achieved by providing a method a command using an input apparatus, the method including receiving a user manipulation input, and canceling command generation if no motion is detected by a motion detector within a predetermined time.

A further embodiment of the general inventive concept may also be also achieved by providing a computer readable medium to contain computer-readable codes as a program to perform a method, the method including detecting a motion of the input apparatus, receiving a user manipulation, and generating a predetermined command using the detected motion and the input user manipulation.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:
FIG. 1 is a block diagram illustrating an input apparatus which is capable of detecting motions according to an exemplary embodiment of the present general inventive concept;
FIG. 2 illustrates a process of generating a pointer move command according to an exemplary embodiment of the present general inventive concept;
FIG. 3 illustrates a process of generating a single command by combining a motion of an input apparatus and a user manipulation if the user manipulation is input in advance according to another exemplary embodiment of the present general inventive concept;
FIG. 4 illustrates a process of generating a single command by combining a motion of an input apparatus and a user manipulation if the motion of the input apparatus is input in advance according to still another exemplary embodiment of the present general inventive concept;
FIG. 5 is a view illustrating operations of moving an input apparatus in an upper right direction and then inputting a touch manipulation on a touch input unit in a lower right direction according to an exemplary embodiment of the present general inventive concept;
FIG. 6 is a view illustrating operations of moving the input apparatus in an upper right direction and then pressing a lower right direction button according to an exemplary embodiment of the present general inventive concept;
FIG. 7 is a view illustrating operations of moving an input apparatus in an upper right direction and then manipulating a jog switch in a lower right direction according to an exemplary embodiment of the present general inventive concept;
FIG. 8 is a view illustrating a result of operations of FIGS. 5 to 7 according to an exemplary embodiment of the present general inventive concept;
FIG. 9 is a view illustrating operations of writing the letter "V" on a touch input unit and then moving up an input apparatus according to another exemplary embodiment of the present general inventive concept;
FIG. 10 is a view illustrating operations of writing the letter "V" on a touch input unit and then moving down an input apparatus according to another exemplary embodiment of the present general inventive concept;
FIG. 11 is a view illustrating operations of pressing a volume button and then moving up an input apparatus according to another exemplary embodiment of the present general inventive concept;
FIG. 12 is a view illustrating operations of pressing a volume button and then moving down an input apparatus according to another exemplary embodiment of the present general inventive concept;
FIG. 13 is a view illustrating operations of moving up an input apparatus and then writing the letter "V" on a touch input unit according to another exemplary embodiment of the present general inventive concept;
FIG. 14 is a view illustrating operations of moving down an input apparatus and then writing the letter "V" on a touch input unit according to another exemplary embodiment of the present general inventive concept;
FIG. 15 is a view illustrating operations of moving up an input apparatus and then pressing a volume button according to another exemplary embodiment of the present general inventive concept; and
FIG. 16 is a view illustrating operations of moving down an input apparatus and then pressing a volume button according to another exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the numerals.

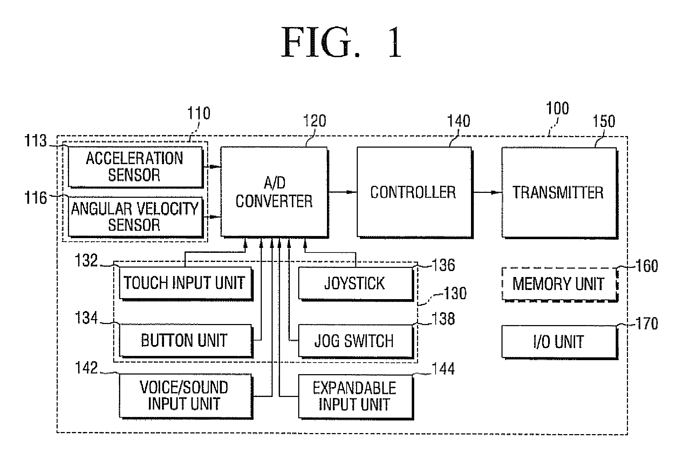

FIG. 1 is a block diagram illustrating an input apparatus which is capable of detecting various motions according to an exemplary embodiment of the present general inventive concept. As illustrated in FIG. 1, an input apparatus 100 includes a motion detector 110, an A/D converter 120, an input unit 130, a controller 140, a transmitter 150, a memory unit 160, and an input/output port unit 170.

The motion detector 110 detects various motions of the input apparatus 100 and is also called a motion sensor. The motion detector 110 includes an acceleration sensor 113 and an angular velocity sensor 116. The acceleration sensor 113 detects acceleration with respect to 3 axes and the angular velocity sensor 116 detects an angular velocity with respect to at least 2 axes. The angular velocity sensor 116 can also detect an angular velocity with respect to 3 axes.

The acceleration sensor 113 is a sensor that senses a dynamic force such as acceleration, vibration, or shock of an object. Since the acceleration sensor 113 can sense a minute movement of an object, it has been widely used in various applications and for various purposes.

The acceleration sensor 113 detects whether acceleration exists with respect to an x-axis, a y-axis, and a z-axis, and detects whether there is a movement of an object.

There are various types of acceleration sensors 113. The acceleration sensor 113 may be classified as an inertial sensor, a gyro sensor, and a silicon semiconductor sensor according to its detecting method. A vibration meter or a clinometer are other examples of acceleration sensor 113.

The angular velocity sensor 116 senses a rotation of an object. The angular velocity sensor 116 detects whether an angular velocity exists with respect to 2-axes or 3-axes, and detects whether there is a rotation of an object. There are various types of angular velocity sensors 116. For example, the angular velocity sensor 116 may be embodied by a gyro sensor. Also, a rotation angle can be sensed by a geomagnetic sensor.

In order to describe various motions of an object, a translation and a rotation should be considered. Accordingly, the motion detector 110 detects a translation using the acceleration sensor 113 and detects a rotation using the angular velocity sensor 116, thereby detecting motions and movements of the input apparatus 100.

The motion detector 110 may output a signal for a detected motion to the A/D converter 120. This is because the signal for the motion detected by the motion detector 110 may be configured of analog signals.

However, it should be noted that the motion detector 110 can output a digital signal as a signal for a detected motion. In this case, no analog/digital converting process would be required. In such a case, the A/D converter 120 would transmit the digital signals directly to the controller 140, omitting analog-to-digital conversion.

Data or information signals are entered into the input unit 130 by a variety of manipulations from a user. Described herein, a user manipulation may be a manipulation that is input through the input unit 130 to perform a function such as a user wishes. For example, the user manipulation may include a physical touch on a touch input unit 132, an applied pressing of a button unit 134, a direction-manipulation of a joystick 136, a manipulation of a jog switch 138, a voice or sound input into a voice/sound input unit 142, or other stimuli from other inputs.

The input unit 130 may include the touch input unit 132, the button unit 134, the joystick, the jog switch 138, the voice/sound input unit 142, and an expandable input unit 144. Besides these, the input unit 130 may include any other type of element that can receive a user manipulation. For example, the input unit 130 may further include a wheel, a track ball, a jog shuttle, a laser or light sensitive input unit, an electronic stimulus, or other user controlled manipulations.

In an exemplary embodiment, the touch input unit 132 is input with a touch from a user. More specifically, the touch input unit 132 may recognize a user touch as tap, stroke, or drag administered by a user's finger or other body part, or the user may use a medium such as a stylus or other writing utensil to manipulate the touch input unit 132. The touch input unit 132 may also recognize letters written by the user by any of these aforementioned methods, for example. The touch input unit 132 may be embodied by a touch pad, a touch screen, or the like, as is known in the art.

In another exemplary embodiment, the button unit 134 is input with a button manipulation from a user. The button unit 134 may be embodied as including number buttons, letter buttons, direction buttons and function buttons. Also, if the direction buttons are manipulated, the button unit 134 may be input with a manipulation about a direction from the user. The button unit 134 may include buttons made of various materials such as hard or soft plastic, polymer, rubber, or the like as is known in the art. The buttons may be included in a touch screen panel that allows different combinations and functionalities of buttons to be displayed depending on the type of host device to be used in association with the input apparatus 100. The meanings of the different buttons as well as numerous different button layout configurations may be stored in the memory unit 160.

Data or information signals may by input by the joystick 136 or other units within the input unit 130 by a variety of manipulations in response to directions from a user. For example, the joystick 136 may be configured to move in a plurality of set angular directional movements, or the joystick may be configured to move and input directional data signals in a 360-degree circle. If the user manipulates the joystick 136 in a direction as he/she wishes, the joystick 136 outputs a signal representing the direction manipulated by the user.

The jog switch (e.g., USPN 7091430) 138 is input with a manipulation about a direction from a user. The jog switch 138 has a stick smaller than the joy stick 136, and may move with similar circular and angular movements to the joy stick 136. If the user manipulates the jog switch in a direction as he/she wishes, the jog switch 138 outputs a signal concerning the direction manipulated by the user.

As described above, the input unit 130 includes various types of input tools and methods for a user to input a variety of commands or instructions via the input apparatus 100. The signals output from the motion detector 110 and the input unit 130 may be analog or digital signals.

If an analog signal for a motion is input from the motion detector 110 and an analog signal for a user manipulation is input from the input unit 130, the A/D converter 120 converts these signals to a digital signal that is detectable by the controller 140. That is, the A/D converter 120 performs an analog/digital conversion with respect to the input analog signals. If digital signals are received, the A/D converter 120 omits the analog/digital conversion and transmits the received signals to the controller 140. If a combination of analog and digital signals are received, the A/D converter converts the analog signals to digital signals and transmits all the digital signals to the controller 140.

The transmitter 150 transmits a command generated by the controller 140 to a device which is to be controlled by the input apparatus 100 (hereinafter, referred to as a "to-be-controlled device"). The to-be-controlled device may be directly connected to the input apparatus 100 through a wire or other physical connection or may be remote controlled wirelessly or through another non-physical connection.

For example, an MP3 player, a PMP, and a mobile phone exemplify the to-be-controlled devices directly or remotely connected to the input apparatus 100. The input apparatus 100 may be a direct or remote controller of a TV that controls a TV at a remote distance. Other to-be-controlled devices that may be controlled directly or remotely include, but are not limited to, computer monitors, digital cameras and camcorders, PDAs, music players, digital telephones, or other devices with input or display screens.

If the input apparatus 100 is a remote controller, the transmitter 150 may adopt one of a radio frequency (RF) module, Zigbee, Bluetooth, and Infra-Red (IR), or other transmission modes known in the art.

The controller 140 controls the operations of the input apparatus 100. The controller 140 generates a predetermined command as a result of various motions detected by the motion detector 110 and a user manipulation input to the input unit 130. The controller 140 uses a memory unit 160 that may or may not be located within the controller 140 to permanently store program data, such as predetermined commands, and to temporarily store user motions detected by the motion detector 110, manipulations input via the input unit 130, and other data as needed. The input apparatus 100 may be programmed, through the input/output port unit 170 for example, to be upgraded with additional command sets or software. The input apparatus also includes the expandable input unit 144 to implement additional methods of inputting user manipulations via the input unit 130.

An example of a predetermined command is one to control a device connected with the input apparatus 100 or a device which is able to be remote controlled. That is, the controller 140 may generate a command to control a host device which is to be controlled by the input apparatus 100 using information input from at least one of the motion detector 110 and the input unit 130.

More specifically, the controller 140 may generate a move command to move a pointer displayed on a screen using various motions detected by the motion detector 110 and user manipulations input to the input unit 130.

The move command may be a command to move a pointer displayed on a TV or a monitor. The move command may use an absolute coordinate value method or a coordinate transformation value method.

As an example, the user manipulation input to the input unit 130 may be a user touch input through the touch input unit 132 or a direction manipulation input through a direction manipulation input unit.

The direction manipulation input unit mainly serves to manipulate directions. For example, the direction manipulation input unit may be direction buttons of the button unit 134, the joystick 136, or the jog switch 138.

In an exemplary case, the controller 140 generates a move command to move a pointer in a same direction as that of a motion detected by the motion detector 110. Also, the controller 140 may generate a move command to move a pointer in the same direction as that of a touch input to the touch input unit 132. Also, the controller 140 may generate a move command to move a pointer in the same direction as a direction input through one of the direction manipulation input units.

Since a motion detected by the motion detector 110 is of low sensitivity but is easy to accelerate, it is advantageous that a user uses the motion detector 110 when moving a pointer quickly.

Also, since the touch input unit 132, the direction buttons of the button unit 134, the joystick 136, and the jog switch 138 are not easy to accelerate but their manipulations are of high sensitivities, they are used to minutely move a pointer.

For example, in order to move a pointer displayed on a TV quickly, the user simply moves the input apparatus 100 in a direction as he/she wishes. In addition, if a minute movement of the pointer is required to select a specific item in a desired direction, the user simply may use one of the touch input unit 132, the direction buttons of the button unit 134, the joystick 136, and the jog switch 138, or other input elements as described herein.

As described above, if the motion detector 110 and the input unit 130 are used to move a pointer displayed on a screen, the user can move the pointer more conveniently with the input apparatus 100 which is capable of detecting various motions.

The controller 140 combines the signals received from motions detected by the motion detector 110 and the signals received from a user manipulation input through the input unit 130, thereby generating a single command to be transmitted to the transmitter 150.

More specifically, if a user manipulation is input through the input unit 130 and if a motion is detected by the motion detector 110 simultaneously or within a predetermined time after the user manipulation is input, the controller 140 generates a single command by combining the input manipulation and the detected motion.

In another embodiment of the present general inventive concept, if no motion is detected for a predetermined time after a user manipulation is input, generating a command using the user manipulation is canceled. That is, a predetermined time after one of a detected motion and a user manipulation is input is a time limit by which the other one must be input.

Also, if a motion is detected by the motion detector 110 and if a user manipulation is input through the input unit 130 simultaneously or within a predetermined time after the motion is detected, the controller 140 generates a singe command by combining the detected motion and the input manipulation. On the other hand, if no user manipulation is input for a predetermined time after a motion is detected, generating a command using the detected motion is canceled.

The input unit 130 includes at least one of the touch input unit 132, the button unit 134, the joystick 136, and the jog switch 138, or other input elements as described herein. The various units within the input unit 130 may work independently, or may be combined on one input apparatus in different configurations.

In operation, the controller 140 activates both of the motion detector 110 and the input unit 130. That is, the controller 140 is controlled to always check which of the motion detector 110 and the input unit 130 receives an input.

In another embodiment, in order to initially detect a motion, the controller 140 may have the ability to activate only the motion detector 110 and may deactivate the input unit 130. After a motion is detected by the motion detector 110, the controller 140 may activate the input unit 130 for a predetermined time.

On the other hand, in order to initially detect a user manipulation of the input unit 130, the controller 140 may activate only the input unit 130 and may deactivate the motion detector 110. Also, after a user manipulation is detected at the input unit 130, the controller may activate the motion detector 110 for a predetermined time.

As described above, the input apparatus 100 capable of motion detection provides various functions.

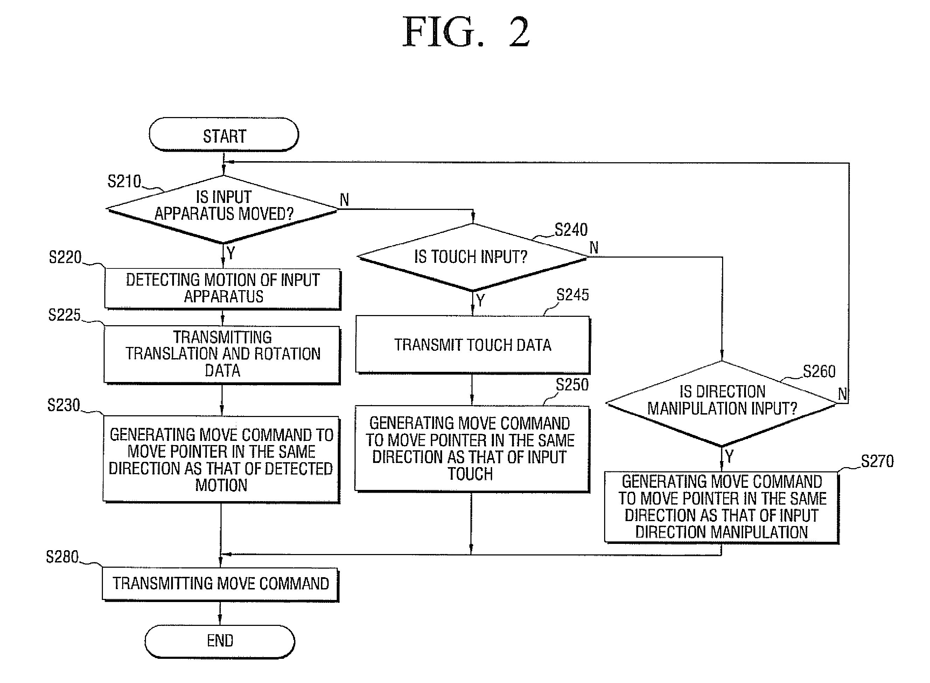

Hereinafter, a process of generating a command to move a pointer using the input apparatus 100 capable of motion detection will be described with reference to FIGS. 1 and 2.

FIG. 2 illustrates a process of generating a pointer move command according to an exemplary embodiment of the present general inventive concept.

The motion detector 110 determines whether the input apparatus 100 is moved or not (operation S210). If the input apparatus 100 is moved (operation S210-Y), the motion detector 110 detects a motion of the input apparatus 100 (operation S220).

At operation S220, the motion detector 110 detects a translation using the acceleration sensor 113 and detects a rotation using the angular velocity sensor 116. Also, the motion detector 110 transmits information about the translation and the rotation to the controller 140 (operation S225).

The controller 140 generates a move command to move a pointer in the same direction as that of the detected motion (operation S230). For example, the controller 140 projects a detected moving trajectory of the input apparatus 100 onto a plane corresponding to a screen of a TV and generates a pointer move command to move a pointer on the TV screen along the trajectory projected onto the plane.

The input apparatus 100 transmits the generated move command to a to-be-controlled device (operation S280). The to-be-controlled device may be directly connected to the input apparatus 100 or may be remote controlled by the input apparatus 100.

If the input apparatus 100 is not moved (operation S210-N), the input apparatus 100 determines whether a touch is input through the touch input unit 132 (operation S240). If a touch is input (operation S240-Y), the motion detector 110 transmits information about the touch to the controller 140 (operation S245). The controller 140 generates a pointer move command to move a pointer in the same direction as that of the input touch (operation S250). Then, the input apparatus 100 transmits the generated move command to the to-be-controlled device (operation S280).

If no touch is input (operation S240-N), the input apparatus 100 determines whether a user manipulation for direction is input through the input unit 130 (operation S260). If a user manipulation of a direction is input (operation S260-Y), the controller 140 generates a pointer move command to move a pointer in the same direction as that of the input manipulation (operation S270). Herein, the manipulation of a direction is made by at least one of the direction button of the button unit 134, the joystick 136, the jog switch 138, or other direction manipulation input units.

Then, the input apparatus 100 transmits the generated move command to a to-be-controlled device (operation S280).

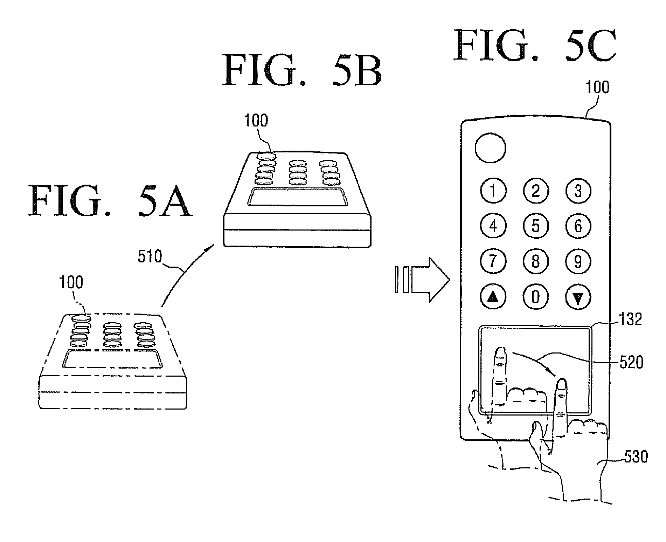

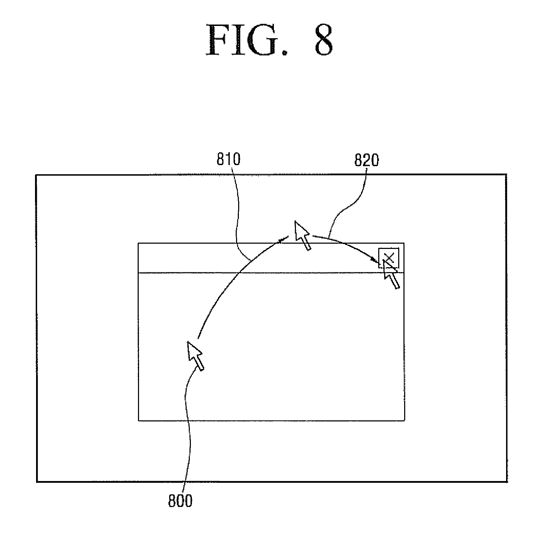

The above-described process will now be described in detail with reference to FIGS. 1 and 5 to 8. FIG. 5 is a view illustrating operations of moving the input apparatus in an upper right direction and then inputting a touch manipulation in a lower right direction through the touch input unit. FIG. 8 is a view illustrating a result of manipulations of FIGS. 5 to 7.

In FIGS. 5 to 8, the input apparatus 100 is a remote controller but is not limited to this.

In FIG. 5, the input apparatus 100 is initially moved from one position as illustrated in FIG. 5A in an upper right direction to a second position illustrated in FIG. 5B. Accordingly, the motion detector 110 detects an upper right motion 510 of the input apparatus 100. As illustrated in FIG. 5C, it can be seen that a user 530 may also input a t lower right direction touch manipulation 520 to the touch input unit 132. Accordingly, the touch input unit 132 is input with a lower right direction touch manipulation 520.

The controller 140 illustrated in FIG. 1 may generate a pointer move command corresponding to the upper right motion 510 of the input apparatus 100 and the lower right direction touch manipulation 520. A movement of a pointer displayed on a screen of a to-be-controlled device is illustrated in FIG. 8.

As shown in FIG. 8, a pointer 800 is moved according to the upper right motion 510 of the input apparatus 100 and the lower right direction touch manipulation 520.

According to the upper right motion 510 of FIG. 5, the pointer 800 of FIG. 8 moves along an upper right moving trajectory 810. Also, according to the lower right direction touch manipulation 520 illustrated in FIG. 5C, the pointer 800 of FIG. 8 moves along a lower right moving trajectory 820.

As described above, the input apparatus 100 may generate a pointer move command based on both motion and touch manipulation so that a user can move the pointer more precisely than is known in the related art using the motion of the input apparatus 100 and the touch manipulation.

The input apparatus 100 thus enables a speedy motion of the input apparatus 100 when moving a pointer speedily in a desired direction. Also, the input apparatus 100 enables a minute manipulation of a moving trajectory, the user can minutely move a pointer to a desired item using the touch manipulation.

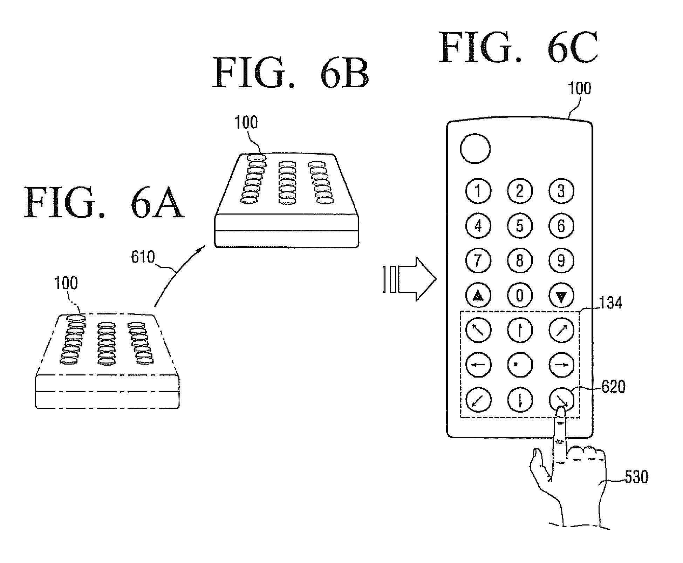

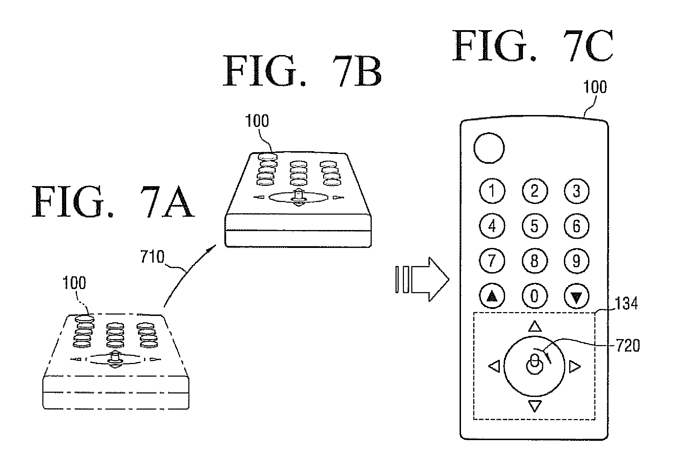

Although this embodiment is realized by a motion of the input apparatus 100 and a manipulation of the touch input unit 132, other manipulations regarding directions can be used. Hereinafter, manipulations of the button unit 134 and the jog switch 138 will be described with reference to FIGS. 6 and 7.

FIG. 6 is a view illustrating operations of moving the input apparatus in an upper right direction and then pressing a lower right direction button according to an exemplary embodiment of the present general inventive concept.

In FIG. 6, the input apparatus is initially moved from one position in FIG. 6A in an upper right direction to a second position illustrated in FIG. 6B. Accordingly, the motion detector 110 detects an upper right motion 610 of the input apparatus 100. As illustrated in FIG. 6C, it can be seen that a user 530 may press a lower right direction button 620 on the button unit 134 to manipulate a pointer in a lower right direction.

The controller 140 illustrated in FIG. 1 may generate a pointer move command corresponding to the upper right motion 610 of the input apparatus 100 and a lower right direction button manipulation 620. The pointer displayed on the screen of the to-be-controlled device is moved as illustrated in FIG. 8.

As shown in FIG. 8, the pointer 800 moves according to the upper right motion 610 of the input apparatus 100 and the lower right direction button manipulation 620.

The pointer 800 of FIG. 8 moves along the upper right moving trajectory 810 according to the upper right motion 610 of FIG. 6. Also, the pointer 800 of FIG. 8 moves along the lower right moving trajectory 820 according to the lower right direction button manipulation 620 of FIG. 6C.

As described above, the input apparatus 100 may generate a pointer move command using both of the motion and the button manipulation so that a user can move the pointer better than is known to the related art using the motion of the input apparatus and the button manipulation.

The input apparatus 100 thus enables a speedy motion of the input apparatus 100 when moving the pointer speedily in a desired direction. Also, the input apparatus 100 enables a minute manipulation of the moving trajectory, such that the user can minutely move a pointer to a desired item using the button manipulation.

FIG. 7 is a view illustrating operations of moving the input apparatus in an upper right direction and then manipulating the jog switch in a lower right direction according to an exemplary embodiment of the present general inventive concept.

In FIG. 7, the input apparatus 100 is initially moved from one position as illustrated in FIG. 7A in an upper right direction to a second position as illustrated in FIG. 7B. Accordingly, the motion detector 110 detects an upper right motion 710 of the input apparatus 100. As illustrated in FIG. 7C, it can be seen that the user 530 may manipulate the jog switch 138 in a circular downward right direction 720. Accordingly, the jog switch 138 is input with a downward right direction manipulation 720. The jog switch 138 may be manipulated clockwise or counter-clockwise to rotate 360 degrees.

The controller 140 illustrated in FIG. 1 may generate a pointer move command corresponding to the upper right motion 710 of the input apparatus 100 and the downward right direction manipulation 720. The pointer displayed on the screen of the to-be-controlled device is moved as illustrated in FIG. 8.

As illustrated in FIGS. 7 and 8, the pointer 800 moves according to the upper right motion 710 of the input apparatus 100 and the downward right direction manipulation 720.

More specifically, the pointer 800 of FIG. 8 moves along the upper right moving trajectory 810 according to the upper right motion 710 illustrated in FIG. 7. Also, the pointer 800 of FIG. 8 moves along the lower right moving trajectory 820 according to the downward right direction manipulation 720, as illustrated in FIG. 7C.

As described above, the input apparatus 100 may generate a pointer move command using both motion of the input apparatus 100 and manipulation of the jog switch 138, so that a user can move the pointer using the motion of the input apparatus 100 and the manipulation of the jog switch 138.

The input apparatus 100 thus enables a speedy motion of the input apparatus 100 when moving the pointer speedily in a desired direction. Also, the input apparatus 100 enables a minute manipulation of the moving trajectory, such that the user can minutely move a pointer to a desired item using the manipulation of the jog switch 138.

As described above, the input apparatus 100 capable of motion detection generates a pointer move command to move the pointer displayed on the screen using the detected motion and the user manipulation.

Hereinafter, with reference to FIGS. 1, 3, 4, and FIGS. 9 to 16, operations of the input apparatus capable of motion detection and generating a predetermined command by combining a detected motion and a user manipulation will be described.

With reference to FIGS. 1 and 3 and FIGS. 9 to 12, the case in which a user manipulation is initially input and then a motion of the input apparatus 100 is detected will be described.

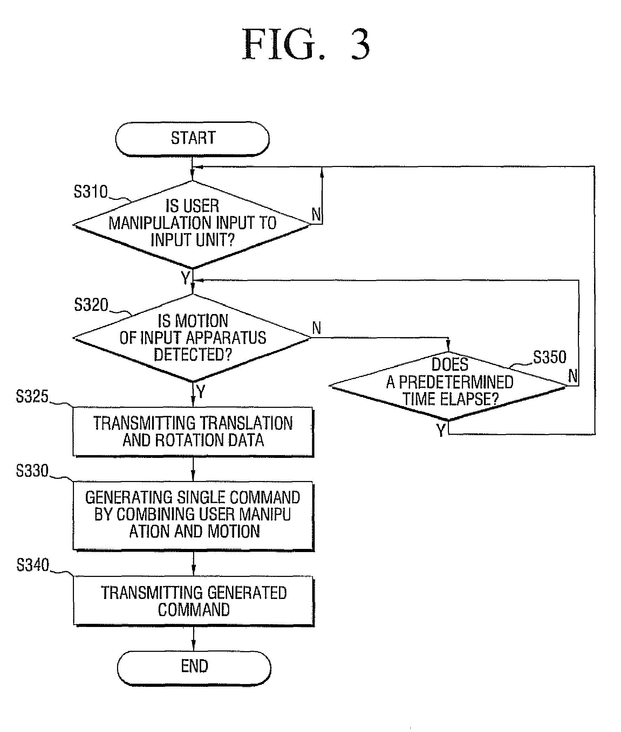

FIG. 3 illustrates a process of generating a single command by combining a motion of the input apparatus and a user manipulation if the user manipulation is input before moving the input apparatus according to another exemplary embodiment of the present general inventive concept.

At first, the input apparatus 100 determines whether a user manipulation is input to the input unit 130 or not (operation S310), Herein, the input unit 130 includes at least one of the touch input unit 132, the button unit 134, the joystick 136, and the jog switch 138, or other input elements as described herein.

If a user manipulation is input (operation S310-Y), it is determined whether a motion of the input apparatus 100 is detected or not (operation S320). If a user manipulation is not input (operation S310-N), the input unit 130 continues to determine whether a user manipulation is input or not (operation S310).

If no motion of the input apparatus 100 is detected (operation S320-N), the input apparatus 100 determines whether a predetermined time elapses (operation S350). If a predetermined time does not elapse (operation S350-N), the input apparatus 100 continues to determine whether a motion of the input apparatus 100 is detected or not (operation S320). If a predetermined time elapses (operation S350-Y), the input unit 130 goes back to operation S 310 to determine whether a user manipulation is input or not.

That is, if a motion is not detected during a predetermined time after a user manipulation is input, an operation of generating a command using the input user manipulation is canceled. That is, a predetermined time after one of a detected motion and a user manipulation is input is a time limit by which the other one must be input.

Otherwise, if a motion of the input apparatus 100 is detected (operation S320-Y), the motion detector 110 transmits information about the translation and the rotation to the controller 140 (operation S325). The controller 140 of the input apparatus 100 generates a single command by combining the input user manipulation data signals and the detected motion data signals (operation S330). Next, the input apparatus 100 transmits the generated command to a to-be-controlled device (operation S340). Herein, the to-be-controlled device may be directly connected to the input apparatus 100 or may be remote controlled by the input apparatus 100.

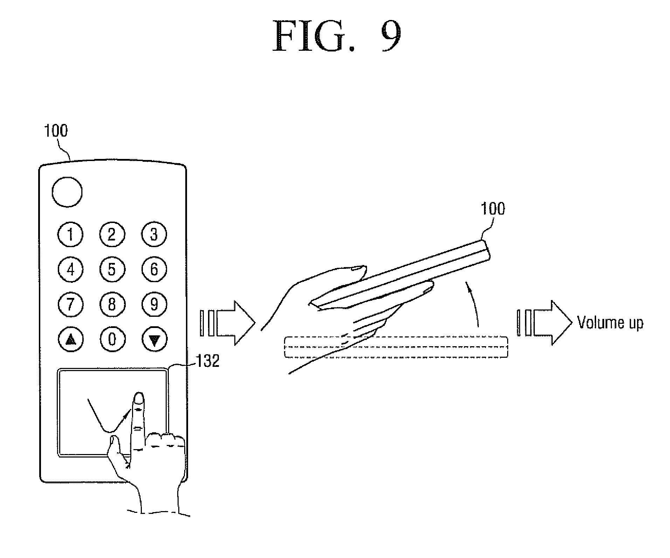

The above process will be described with reference to FIGS. 9 to 12 on the example that the input unit 130 is the touch input unit 132 and the button unit 134.

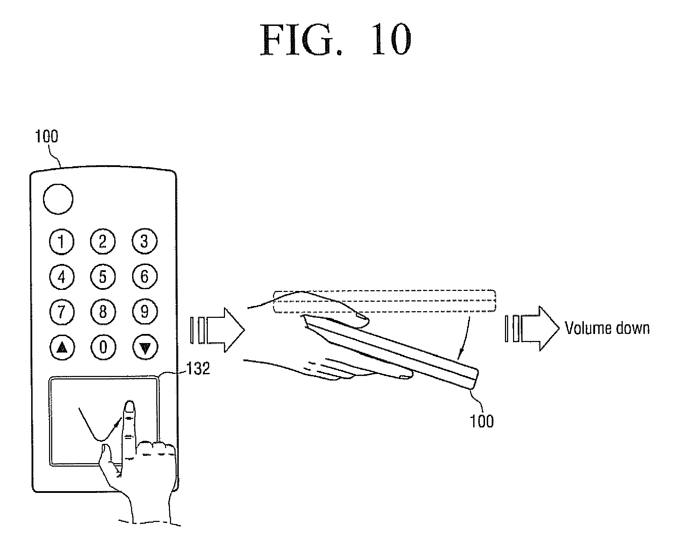

With reference to FIGS. 9 and 10, a process will be described that if a user touch is input and if a motion is detected simultaneously or within a predetermined time after the touch is input, a single command may be generated by combining signal data from the input touch and the detected motion .

FIG. 9 is a view illustrating operations of writing the letter "V" on the touch input unit 132 and then the motion of moving or tilting up the input apparatus in an upward direction according to another exemplary embodiment of the present general inventive concept.

As illustrated in FIG. 9, if a user writes the letter "V" on a touch input unit 132 and simultaneously or within a predetermined time afterwards, the user moves or tilts the up the input apparatus 100, the controller 140 of the input apparatus 100 may generate a command to raise the volume of the to-be-controlled device.

FIG. 10 is a view illustrating operations of writing the letter "V" on the touch input unit 132 and then the motion of moving or tilting down the input apparatus in a downward direction according to another exemplary embodiment of the present general inventive concept.

As illustrated in FIG. 10, if a user writes the letter "V" on the touch input unit 132 and simultaneously or within a predetermined time afterwards, the user moves or tilts down the input apparatus 100, the controller 140 of the input apparatus 100 may generate a volume down command to lower the volume of the to-be-controlled device.

If the signals sent from the motion detector 110 and the input unit 130 are analog signals, the analog signals are directed to the A/D converter 120 to be converted to digital signals. If the signals sent from the motion detector 110 and the input unit 130 are digital signals, the digital signals are transmitted through the A/D converter 120, without conversion, to the controller 140. The controller 140 combines the one or more signals received from the A/D converter 120 into a single signal that is delivered to the transmitter 150.

The input apparatus 100 transmits the generated volume up or volume down command to control the volume of a TV or other to-be-controlled device where sound volume may be raised or lowered.

As described above, the input apparatus 100 may generate a single command by combining user touch and detected motion signal data from the manipulation and movement of the input apparatus 100.

In another embodiment of the present general inventive concept, volume adjustment by writing the letter "V" on the touch input unit 132 is described. However, any other function can be adjusted in such a manner. For example, a command to change the channel may be generated by writing the letter "C", and a command to adjust a zoom may be generated by writing the letter "Z". Other sound qualities and letters may be input depending on the to-be-controlled device. For example, "B" may represent the bass tone to be raised or lowered when the to-be-controlled device is a stereo receiver or similar device, and "T" may represent treble. These and other letters or words of the Standard English alphabet may be written on the input touch unit 132 and recognized by the controller 140 based on program data stored in the memory unit 160. Additional standard and non-standard character sets and foreign language sets may be stored in the memory unit 160 or input via the input/output port 170 to be accessed by the controller 140 to determine a variety of written characters that may represent a variety of different commands. The memory unit 160 may store recognition software to detect variations in letters and characters, or characters in other languages.

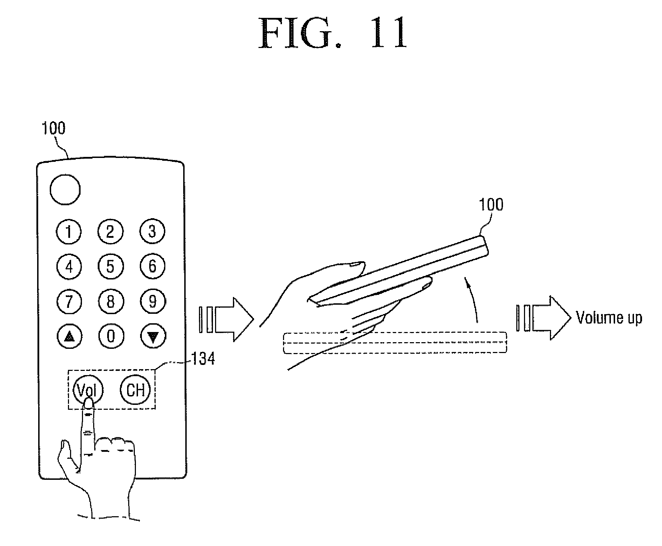

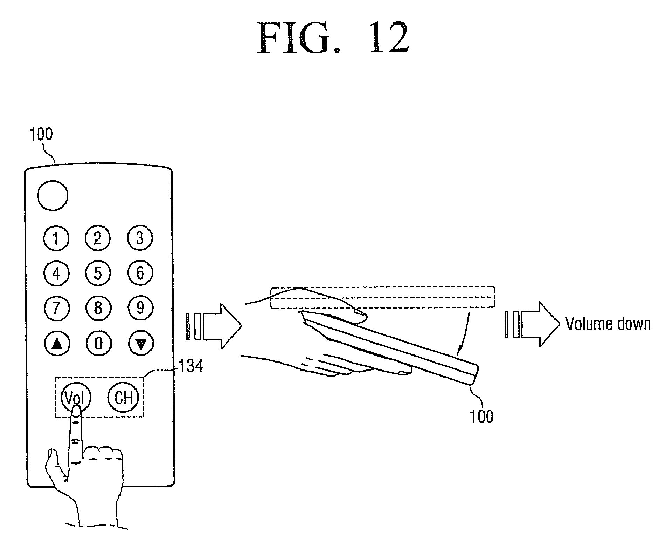

Hereinafter, with reference to FIGS. 11 and 12, a process will be described that if a button manipulation is input from a user and if a motion is detected simultaneously or within a predetermined after the button manipulation is input, a command may be generated by combining signal data from the input button manipulation and the detected motion.

FIG. 11 is a view illustrating operations of pressing a volume button and then moving up the input apparatus 100 according to another exemplary embodiment of the present general inventive concept.

As illustrated in FIG. 11, if a user presses a "Vol" button on the button unit 134 and if the user moves or tilts up the input apparatus 100 simultaneously or within a predetermined time after pressing the "Vol" button, the input apparatus 100 generates a volume up command. That is, if the user moves up the input apparatus while pressing the "Vol" button on the button unit 134 or within a predetermined time after pressing the button, the user can turn up the volume of the to-be-controlled device.

FIG. 12 is a view illustrating operations of pressing the volume button and then moving down the input apparatus 100 according to another exemplary embodiment of the present general inventive concept.

As illustrated in FIG. 12, if a user presses the "Vol" button on the button unit 134 and if the user moves or tilts down the input apparatus 100 simultaneously or within a predetermined time after pressing the "Vol" button, the input apparatus 100 generates a volume down command. That is, if the user moves down the input apparatus 100 while pressing the "Vol" button on the button unit 134 or within a predetermined time after pressing the button, the user can turn down the volume of the to-be-controlled device.

The input apparatus 100 transmits the generated volume up or volume down command to a TV to control the volume of the TV or other to-be-controlled device where sound volume may be raised or lowered.

As described above, the input apparatus 100 generates a single command by combining the user button manipulation and the detected motion.

In this embodiment a volume control by pressing the "Vol" button on the button unit 134 is described. However, any other function can be controlled in such a manner. For example, the input apparatus 100 may generate a command to change the channel if a "CH" button is pressed, or other buttons may be configured to control various functions of other to-be-controlled devices.

In this embodiment, the input apparatus 100 is moved or tilted up and down. However, any other direction of motion may be detected and combined with a user manipulation. The various directions of motion and other manipulation techniques and their corresponding command signals may be stored in the controller 140 or in the memory unit 160.

As described above, if a user manipulation is input and if a motion is detected simultaneously or within a predetermined time after the user manipulation is input, the input apparatus 100 generates a single command by combining the input manipulation and the detected motion.

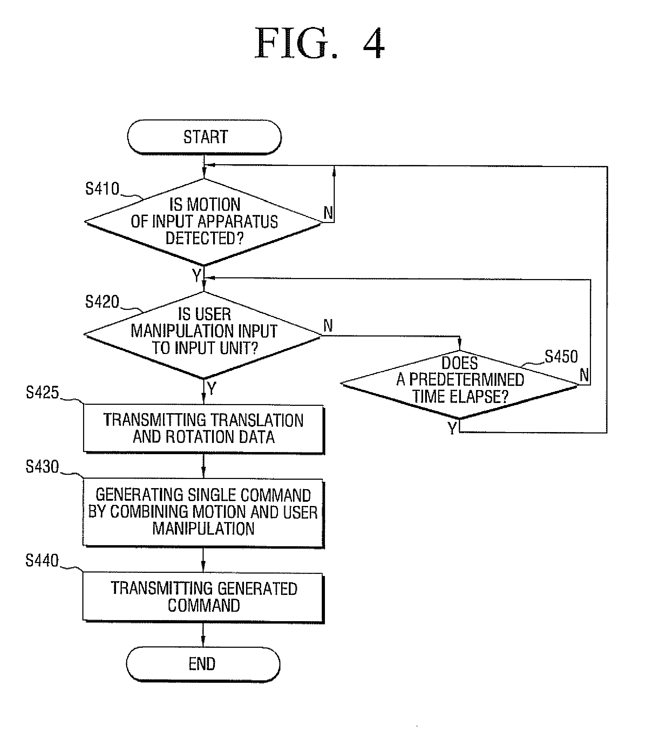

Hereinafter, the case in which a motion of the input apparatus 100 is initially detected and then a user manipulation is input will be described with reference to FIG. 4 and FIGS. 13-16.

At first, the input apparatus 100 determines whether a motion is detected or not (operation S410). If a motion is detected (operation S410-Y), it is determined whether a user manipulation is input to the input unit 130 or not (operation S420). If a motion is not detected (operation S410-N), the input apparatus 100 continues to determine whether a motion of the input apparatus 100 is detected or not (operation S410). Herein, the input unit 130 includes at least one of the touch input unit 132, the button unit 134, the joystick 136, and the jog switch 138, or other input elements as described herein, for example.

If no user manipulation is input to the input unit 130 (operation S420-N), the input apparatus determines whether a predetermined time elapses or not (operation S450). If a predetermined time does not elapse (operation S450-N), the input apparatus continues to determine whether a user manipulation is input to the input unit 130 or not (operation S420). On the other hand, if a predetermined time elapses (operation S450-Y), the input apparatus 100 goes back to operation S410 to determine whether a motion of the input apparatus 100 is detected or not (operation S410).

That is, if a user manipulation is not input for a predetermined time after a motion of the input apparatus 100 is detected, the operation of generating a command using the detected motion is canceled. That is, a predetermined time after one of a detected motion and a user manipulation is input is a time limit by which the other one must be input.

On the other hand, if a user manipulation is input to the input unit 130 (operation S420-Y), the motion detector 110 transmits information about the translation and the rotation to the controller 140 (operation S425). The controller 140 of the input apparatus 100 generates a command by combining the input user manipulation signal data and the detected motion data signals (operation S430). Also, the input apparatus 100 transmits the generated command to a to-be-controlled device (operation S440). Herein, the to-be-controlled device may be directly connected to the input apparatus 100 or may be remote controlled by the input apparatus 100.

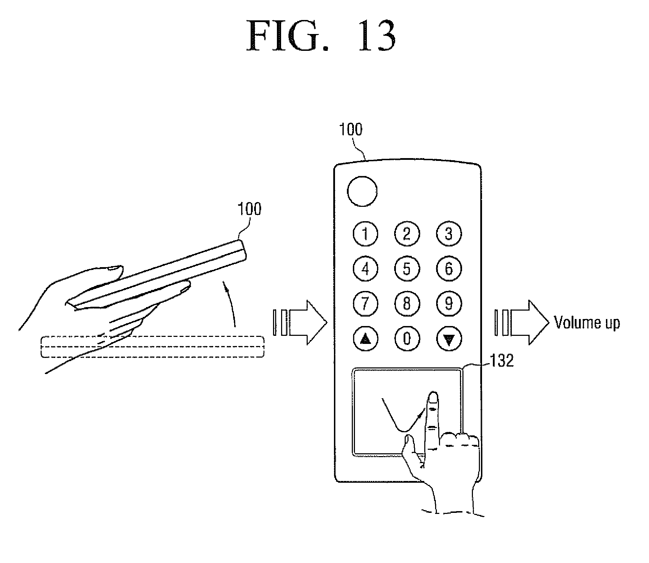

The above process will be described in detail with reference FIGS. 13 to 16 on the examples that the input unit 130 is the touch input unit 132 and the button unit 134.

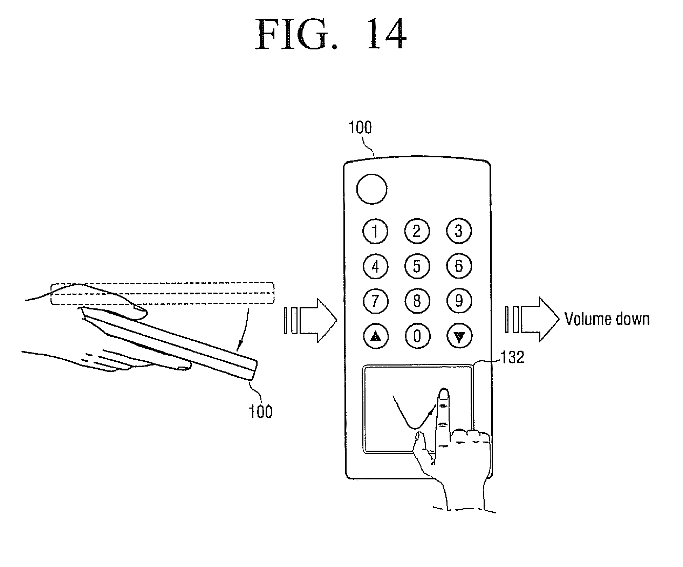

With reference to FIGS. 13 and 14, a process will be described that if a motion of the input apparatus 100 is detected and if a user touch manipulation is input simultaneously or within a predetermined time after the motion is detected, a single command may be generated by combining data signals from the input touch and the detected motion.

FIG. 13 illustrates operations of moving or tilting up the input apparatus and then writing the letter "V" on the touch input unit 132 according to another exemplary embodiment of the present general inventive concept.

As illustrated in FIG. 13, if a user moves or tilts up the input apparatus 100 and simultaneously or within a predetermined time after that if the user writes the letter "V" on the touch input unit 132, the input apparatus 100 generates a volume up command.

FIG. 14 is a view illustrating operations of moving or tilting down the input apparatus and then writing the letter "V" on the touch input unit according to another exemplary embodiment of the present general inventive concept.

As illustrated in FIG. 14, if a user moves or tilts down the input apparatus 100 and simultaneously or within a predetermined time after that if the user writes the letter "V" on the touch input unit 132, the input apparatus 100 generates a volume down command.

The input apparatus 100 transmits the generated volume up or volume down command to a TV to control the volume of the TV or other to-be-controlled device where sound volume may be raised or lowered.

As described above, the input apparatus 100 generates a single command by combining the user touch data signals and the detected motion data signals.

In this embodiment, the volume being controlled by writing the letter "V" on the touch input unit 132 is described. However, any other function can be controlled in such a manner. For example, the input apparatus 100 may generate a command to change the channel by writing the letter "C", and may generate a command to adjust a zoom by writing the letter "Z". Additionally, numerous other characters as described above may be stored in the controller 140 or memory unit 160 to implement other features of the present general inventive concept.

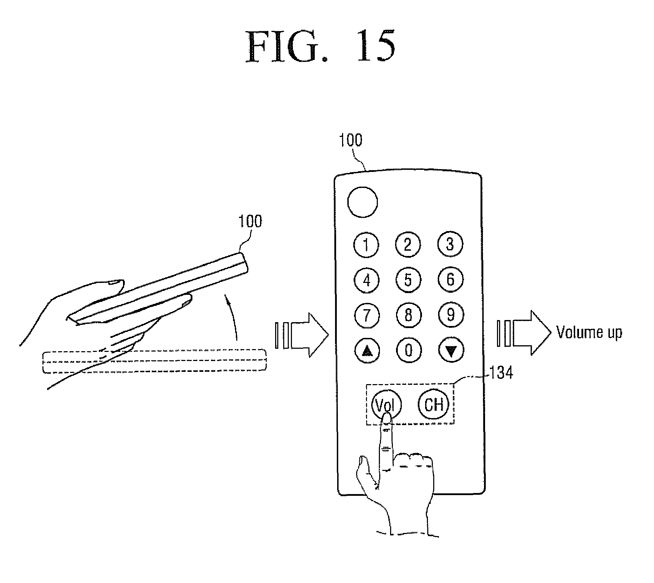

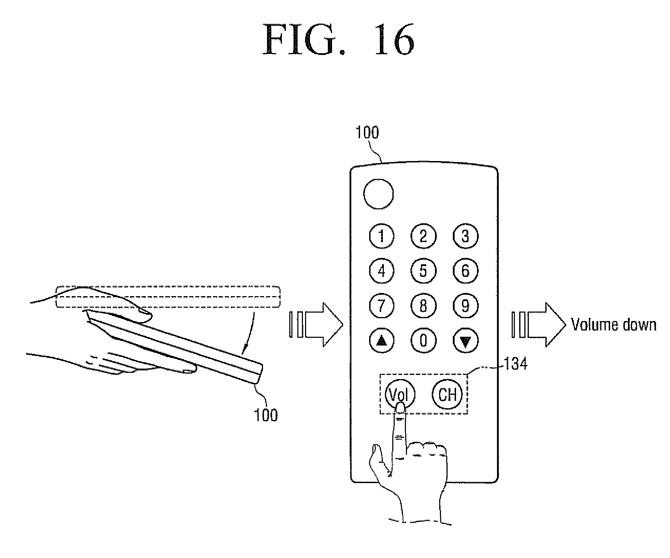

Hereinafter, with reference to FIGS. 15 and 16, a process will be described that if a motion of the input apparatus 100 is detected and if a user button manipulation is input simultaneously or within a predetermined time after the motion is detected, a single command may be generated by combining signal data from the input button manipulation and the detected motion.

FIG. 15 is a view illustrating operation of moving or tilting up the input apparatus 100 and then pressing the volume button according to another exemplary embodiment of the present general inventive concept.

As illustrated in FIG. 15, if a user moves or tilts up the input apparatus 100 and simultaneously or within a predetermined time after that if the user presses a "Vol" button on the button unit 134, the input apparatus 100 generates a volume up command.

FIG. 16 is a view illustrating operations of moving or tilting down the input apparatus 100 and then pressing the volume button according to another exemplary embodiment of the present general inventive concept.

As illustrated in FIG. 16, if a user moves or tilts down the input apparatus 100 and simultaneously or within a predetermined time after that if the user presses the "Vol" button on the button unit 134, the input apparatus 100 generates a volume down command.

The input apparatus 100 transmits the generated volume up or volume down command to a TV to control the volume of the TV or other to-be-controlled device where sound volume may be raised or lowered.

As described above, the input apparatus 100 generates a single command by combining the user button manipulation signal data and the detected motion signal data.

In this embodiment, the volume control by pressing the "Vol" button of the button unit 134 is described. However, any other function can be controlled in such a manner. For example, the input apparatus 100 may generate a command to change the channel if a "CH"" button is pressed.

In the above embodiment, only the up and down motions of the input apparatus 100 are detected. However, other direction motions can be detected to be combined with the user manipulation. For example, a motion may be detected as the input apparatus 100 moves horizontally, such as side-to-side.

In this embodiment, the input apparatus 100 may be a remote controller type device. In this case, a user may remotely control a to-be-controlled device using the input apparatus 100. The to-be-controlled device may be a TV, a DVD player, an MP3 or other music player, a home theater, a set-top box, a stereo receiver, a digital camera, a personal or laptop computer, a digital camcorder, or the like.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Also, the input apparatus 100 may be mounted on a specific device. In an exemplary embodiment, a user may control the specific device using the input apparatus 100 mounted on the specific device. In this case, the specific device on which the input apparatus 100 is provided may be an MP3 player, a mobile phone, a PMP, or a PDA, for example.

For example, if the input apparatus 100 is provided on the MP3 player, the volume of the MP3 player may be raised by moving or tilting up the MP3 player while pressing a volume button of the MP3 player and the volume may be lowered by moving or tilting down the MP3 player while pressing the volume button.

As described above, according to the exemplary embodiments of the present general inventive concept, the input apparatus 100 which generates a predetermined command by combining a motion detected by the motion detector 110 and a user manipulation input to the input unit 130 and the input method applied to the input apparatus 100 are provided so that the user can use the input apparatus 100 capable of motion detection in various manners.

Although a few embodiments of the present general inventive concept have been illustrated and described, it will be appreciated by those skilled in the art that changes may be made in these embodiments without departing from the principles and spirit of the general inventive concept, the scope of which is defined in the appended claims and their equivalents.

## Claims

1. An input apparatus, comprising:
a motion detector which detects a motion of the input apparatus;
an input unit which is input with a user manipulation; and
a controller which generates a predetermined command using a motion detected by the motion detector and a user manipulation input to the input unit.

2. The input apparatus as claimed in claim 1, wherein the controller generates a move command to move a pointer displayed on a screen using a motion detected by the motion detector and a user manipulation input to the input unit.

3. The input apparatus as claimed in claim 2, wherein the input unit comprises a touch input unit which is input with a user touch,
wherein, if a motion is detected by the motion detector, the controller generates a move command to move the pointer in the same direction as that of the detected motion, and if a touch is input to the touch input unit, the controller generates a move command to move the pointer in the same direction as that of the input touch.

4. The input apparatus as claimed in claim 2 or 3, wherein the input unit includes a direction manipulation input unit which is input with a manipulation of a direction,
wherein, if a motion is detected by the motion detector, the controller generates a move command to move the pointer in the same direction as the detected motion, and if a manipulation of a direction is input to the direction input unit, the controller generates a move command to move the pointer in the same direction as the input direction.

5. The input apparatus as claimed in claim 4, wherein the direction manipulation input unit is at least one of a jog switch, a joystick and a direction button.

6. The input apparatus as claimed in any one of claims 1 to 5, wherein the controller generates a predetermined command by combining a motion detected by the motion detector and a user manipulation input to the input unit.

7. The input apparatus as claimed in claim 6, wherein, if a user manipulation is input to the input unit and if a motion is detected by the motion detector simultaneously or within a predetermined time after the user manipulation is input, the controller generates a command by combining an input manipulation signal and a detected motion signal.

8. The input apparatus as claimed in claim 6 or 7, wherein the input unit includes a touch input unit which is input with a user touch,
wherein, if a user touch is input to the touch input unit and if a motion is detected by the motion detector simultaneously or within a predetermined time after the touch is input, the controller generates a command by combining an input touch signal and a detected motion signal.

9. The input apparatus as claimed in any one of claims 6 to 8, wherein the input unit includes a button unit having a plurality of buttons,
wherein, if a button manipulation is input to the button unit and if a motion is detected by the motion detector simultaneously or within a predetermined time after the button manipulation is input, the controller generates a command by combining a button manipulation signal and a detected motion signal.

10. The input apparatus as claimed in any one of claims 6 to 9, wherein, if a motion is detected by the motion detector and if a user manipulation is input to the input unit simultaneously or within a predetermined time after the motion is detected, the controller generates a command by combining a detected motion signal and an input manipulation signal.

11. The input apparatus as claimed in any one of claims 6 to 10, wherein the input unit comprises a touch input unit which is input with a user touch,
wherein, if a motion is detected by the motion detector and if a user touch is input to the touch input unit simultaneously or within a predetermined time after the motion is detected, the controller generates a command by combining a detected motion signal and an input touch signal.

12. The input apparatus as claimed in any one of claims 6 to 11, wherein the input unit comprises a button unit having a plurality of buttons,
wherein, if a motion is detected by the motion detector and if a button manipulation is input to the button unit simultaneously or within a predetermined time after the motion is detected, the controller generates a command by combining a detected motion signal and a button manipulation signal.

13. The input apparatus as claimed in any one of claims 1 to 12, wherein the motion detector includes an acceleration sensor and an angular velocity sensor.

14. A method of inputting a command using an input apparatus, the method comprising:
detecting a motion of the input apparatus;
receiving a user manipulation; and
generating a predetermined command using the detected motion and the input user manipulation.

15. The method as claimed in claim 14, wherein the command generating operation generates a move command to move a pointer displayed on a screen using both of the detected motion and the input user manipulation.
